# EUROPEAN PATENT SPECIFICATION

(11) **EP 4 260 684 B1**
(45) Date of publication and mention of the grant of the patent: **26.11.2025**
(21) Application number: 22315088.9
(22) Date of filing: 15.04.2022
(51) Int. Cl.: A01G 31/02

(54) **INDOOR PLANT GROWING SYSTEM**
INNENRAUMPFLANZENZUCHTSYSTEM
SYSTÈME DE CULTURE DE PLANTES EN INTÉRIEUR

(43) Date of publication of application: 18.10.2023
(73) Proprietor: Urban Cuisine, 35000 Rennes (FR)
(72) Inventor: Thebault, Joséphine, 75005 Paris (FR); Lorcy, Antoine, 75005 Paris (FR)
(74) Representative: Vial, Lionel

(56) References cited:
- EP-A1- 3 005 866
- CN-A- 1 753 613
- CN-A- 113 711 882
- KR-B1- 101 234 587
- KR-B1- 101 816 243
- KR-B1- 102 156 744
- KR-Y1- 200 309 893

## Description

### Field of the invention

The present invention relates to an indoor plant growing system and the use thereof to grow plants.

### Technical background

Pot cultivation of plants has been known for a long time. The main difficulty with this type of culture lies in the need for regular watering of the cultivated plants, as the limited amount of growth substrate in the pots does not allow for long term water reserves, as would be the case in full soil.

One way to overcome this difficulty is to pour water on top of the growth substrate. However, this type of watering tends to wash nutrients from the growth substrate. Besides, seeds are also dragged down the growth substrate, which prevents their germination and favors their decay.

Another way to overcome this difficulty is to provide water by the bottom of the pot typically through a hole in the bottom wall of the pot. Water then diffuses within the growth substrate by capillarity.

However, the quantity of water diffusing through the growth substrate is often insufficient to humidify the whole growth substrate. Besides, developing plant roots tend to obstruct the hole thereby forming a barrier to the penetration of water in the growth substrate. An indoor plant growth system is known from document KR102156744B1.

In order to overcome this problem it is has been proposed in FR3059205 to provide containers for growth substrate having a bottom wall with at least one hole opening to an irrigation tube which plunges into a water-tank, wherein the region of the bottom wall around the hole comprises means to guide roots away from the hole.

However, this solution imposes to use culture pods of growth substrate having a specific form fitting the guiding means; thereby preventing users from using any growth substrate. Besides, the guiding means are not always sufficient to prevent roots from obstructing the hole.

Accordingly, there is a need for alternative solutions of watering potted growth substrates.

### Summary of the invention

The present invention arises from the unexpected finding by the inventors that plunging a container for a plant growth substrate with a lateral wall and/or bottom wall permeable to water for as little as 0.5 mm directly into a water-tank allowed for a sufficient humidification of the growth substrate while preventing roots from rotting.

Accordingly, the present invention relates to an indoor plant growing system comprising:
- a casing;
- at least one container for a plant growth substrate within the casing, wherein the container comprises a lateral wall, a bottom wall and a top opening, wherein the lateral wall and/or the bottom wall is permeable to water, wherein the lateral wall has a height from the bottom wall to the top opening, and
- a water-tank within the casing and located below the at least one container, wherein the water-tank has a bottom wall and a maximum fill level,
characterized in that the at least one container is disposed such that from 0.5 mm of the height of the lateral wall from the bottom wall to 1/8 of the height of the lateral wall from the bottom wall is below the maximum fill level.

The present invention also relates to the use of the indoor plant grow system as defined above, to grow plants.

### Description of the figures

Figure 1 represents a plant growing system according to the invention.
Figure 2 represents a container according to the invention and its position with respect to the maximum fill level. The double arrow (A) represents the portion of the height of the lateral wall from the bottom wall which is below the maximum fill level.

### Description of the invention

As intended herein, the word "comprising" is synonymous to "include" or "contain". When a subject-matter is said to comprise one or several features, it is meant that other features than those mentioned can be comprised in the subject-matter. Conversely, the expression "constituted of" is synonymous to "consisting of". When a subject-matter is said to consist of one or several features, it is meant that no other features than those mentioned are comprised in the subject-matter.

### Casing

As intended herein, the casing can be made of any material. Preferably, the casing is made out of metal, such as steel or aluminium, of glass, and/or of wood, such as solid wood, chipboard, melamine, medium density fiber (MDF), oriented strand board (OSB), plywood, compact...

Preferably, the casing is substantially parallelepipedic and has a height of from 40 cm to 2.5 m, a length of from 30 cm to 1.5 m and a width of from 30 cm to 1.5 m.

Preferably, the casing has the appearance of a piece of furniture, such as a cupboard or a box, or of a household appliance, such as an oven, a dishwasher or a refrigerator.

Preferably, the case has a front side which is a door. Preferably, the front side may be transparent.

Preferably, the inner walls of the casing reflect light. More preferably, the inner walls of the casing have light coloured, white or mirror-like surfaces.

Advantageously, the light-reflecting properties of the inner walls of the casing favour plant growth.

### Container

The at least one container can be made of any material. Preferably, the at least one container is made of a non-putrescible material. More preferably, the at least one container is made of a metal material, such as steel or aluminium, or of a plastic material, such as polyethylene (PE), polypropylene (PP) and polyvinyl chloride (PVC). Preferably, the container is made of a sustainable material.

The at least one container can be of any shape suitable to accommodate a growth substrate, such a square, rectangular, cylindrical or truncated cone shape. Preferably, the at least one container is of a cylindrical or truncated cone shape. Preferably, the lateral wall is in the shape of a cylinder or a truncated cone.

Preferably, the height of the lateral wall of the at least one container is of at least 3, 4, 5, 6, 7, 8, 9, 10, 15 or 20 cm.

Preferably, the height of the lateral wall of the at least one container is of at most 30, 25, 20, 15, 14, 13, 12, 11, 10, 9, 8, 7, 6 or 5 cm.

Preferably, the height of the lateral wall of the at least one container is of from 3 cm to 30 cm, of from 5 cm to 15 cm, or of from 6 cm to 7 cm.

Preferably, the volume of the at least one container is of at least 100, 110, 120, 130, 140, 150, 160, 170, 180, 190, 200, 300, 400, 500, 600, 700, 800, 900, 1000, 1500, 2000, 3000, 4000 or 5000 cm³.

Preferably, the volume of the at least one container is of at most 10000, 5000, 4000, 3000, 2000, 1500, 1000, 900, 800, 700, 600, 500, 400, 300, 200, 190, 180, 170, 160 or 150 cm³.

Preferably, the volume of the at least one container is of from 100 cm³ to 10000 cm³, of from 500 to 1500 cm³ or of from 900 to 1000 cm³.

Preferably, the indoor plant grow system as defined above comprises at least 2, 4, 6, 8, 10, 16, 18, 20, 24 or 32 containers.

Preferably, the indoor plant grow system as defined above comprises at most 128, 64, 32, 24, 20 ,18 or 16 containers.

Preferably, the indoor plant grow system as defined above comprises from 2 to 128, from 10 to 32 or from 16 to 20 containers.

Preferably, the bottom wall of the container is permeable to water. More preferably, the bottom wall of the container and the lateral wall of the container are permeable to water.

Preferably, the lateral wall and/or the bottom wall of the at least one container comprise a plurality of apertures. More preferably, the lateral wall and/or the bottom wall of the at least one container comprise at least 10, 20, 30, 40, 50, 60, 70, 80, 90, 110 or 120 apertures. More preferably, the lateral wall and/or the bottom wall of the at least one container comprise at most 150, 140, 130 or 120 apertures. Most preferably, the lateral wall and/or the bottom wall of the at least one container comprise at most from 110 to 120 apertures.

Preferably, the apertures have an individual surface of at least 1, 2, 3, 4, 5, 6, 7, 8, 9 or 10 mm². Preferably, the apertures have an individual surface of at most 50, 25, 20, 10, 9, 8, 7, 6 or 5 mm². Preferably, the apertures have an individual surface of from 1 to 50 mm², more preferably from 1 to 20 mm² and most preferably from 1 to 10 mm².

Preferably, the lateral wall and/or the bottom wall comprise or consist of a mesh-like or net-like structure wherein the void surface, i.e. the combined surface of the apertures, of the structure is greater than the material-covered surface of the structure.

Alternatively, the lateral wall and/or the bottom wall of the container can be made of a porous material, such as a porous ceramic. As intended herein, a porous material is such that water can freely flow through it.

Advantageously, the plurality of apertures or the porous material allows water to freely flow through the lateral wall and/or the bottom wall of the container while preventing clogging by plant roots.

Preferably, the at least one container is disposed such that at least 0.5, 0.75, 1, 2, 3, 4, 5, 6, 7, 8, 9, 10, 11, 12, 13, 14, or 15 mm of the height of the lateral wall from the bottom wall is below the maximum fill level.

Preferably, the at least one container is disposed such that at most 1/32, 1/24, 1/16, 1/12, 1/10, 1/8, 1/7, 1/6, 1/5, or 1/4 of the height of the lateral wall from the bottom wall is below the maximum fill level. Preferably, the at least one container is disposed such that at most 20, 19, 18, 17, 16, 15, 14, 13, 12, 11, 10, 9, 8, 7, 6 or 5 mm of the height of the lateral wall from the bottom wall is below the maximum fill level.

Preferably, the at least one container is disposed such that from 0.5 mm of the height of the lateral wall from the bottom wall to 1/8 of the height of the lateral wall from the bottom wall is below the maximum fill level. More preferably, the at least one container is disposed such that from 1 mm of the height of the lateral wall from the bottom wall to 1/8 of the height of the lateral wall from the bottom wall is below the maximum fill level. Most preferably, the at least one container is disposed such that from 2 mm of the height of the lateral wall from the bottom wall to 1/8 of the height of the lateral wall from the bottom wall is below the maximum fill level.

Preferably, the at least one container is disposed such that from 0.5 mm of the height of the lateral wall from the bottom wall to 20 mm of the height of the lateral wall from the bottom wall is below the maximum fill level. More preferably, the at least one container is disposed such that from 1 mm of the height of the lateral wall from the bottom wall to 10 mm of the height of the lateral wall from the bottom wall is below the maximum fill level. Most preferably, the at least one container is disposed such that from 2 mm of the height of the lateral wall from the bottom wall to 5 mm of the height of the lateral wall from the bottom wall is below the maximum fill level.

Advantageously, the position according to the invention of the at least one container with respect to the maximum fill level ensures a sufficient supply in water while improving the development of plant roots and preventing their rotting, in spite of water being allowed to freely flow through the lateral wall and/or the bottom wall of the at least one container.

### Water-tank

Preferably, the water-tank has a height from its bottom wall to the maximum fill level of at least 5, 6, 7, 8, 9, 10, 11, 12, 13, 14, 15, 20, 25, 30 or 35 cm.

Preferably, the water-tank has a height from its bottom wall to the maximum fill level of at most 40, 35, 30, 25, 20, 15, 14, 13, 12, 11 or 10 cm.

Preferably, the water-tank has a height from its bottom wall to the maximum fill level of from 5 cm to 40 cm, from 8 cm to 20 cm or 9 cm to 13 cm.

Preferably, the water-tank has a volume from its bottom wall to the maximum fill level of at least 0.5, 0.6, 0.7, 0.8, 0.9, 1, 1.5, 2, 3, 4, 5, 6, 7, 8, 9, 10, 11, 12, 13, 14, 15, 20, 25 or 30 L.

Preferably, the water-tank has a volume from its bottom wall to the maximum fill level of at most 50, 40, 30, 25, 20, 15, 14, 13, 12, 11, 10, 9, 8, 7, 6, 5, 4, 2, 1.5, 1, 0.9, 0.8, 0.7, 0.6 or 0.5 L.

Preferably, the water-tank has a volume from its bottom wall to the maximum fill level of from 1 to 40 L, 5 to 20 L or 8 to 10 L.

Preferably, the water-tank has a minimum fill level. The minimum fill level is positioned 2 mm, preferably 1 mm, or less, below the bottom wall of the at least one container.

Preferably, the water-tank comprises at least one water level detector for detecting when the level of water in the water-tank is at or below the minimum fill level and/or for detecting when the level of water in the water-tank is at or above the maximum fill level.

Preferably, the plant growing system of the invention comprises at least one water level signalling module. The water level signalling module signals when the level of water in the water-tank is at or below the minimum fill level and/or when the level of water in water-tank is at or above the maximum fill level.

Preferably, the water-tank comprises at least one water-oxygenating or aerating device.

Preferably, the water-tank comprises a water oximeter.

Advantageously, oxygenating or aerating water in the water-tank prevents the development of foul smells and of algae, moulds and mosses and favours the developments of plant roots.

Preferably, the water-tank is covered by an opaque cover.

Preferably, the water-tank comprises water. More preferably, the water in the water-tank is tap water, filtrated water, or rain water.

More preferably, the water in the water-tank does not comprise plant nutrients.

Advantageously, the presence of an opaque cover and/or the absence of plant nutrients in the water prevents the growth of algae, moulds and mosses in the water-tank.

### Growth substrate

Preferably, the plant growth substrate comprises a source of nutrients, such as fertiliser, which can be a synthetic or organic fertiliser.

As intended herein, the nutrients are suitable for promoting or sustaining plant growth, i.e. are plant nutrients. The source of nutrients preferably comprises at least one of a potassium (K) source, a phosphorus (P) source, a nitrogen (N) source and a mineral salt or oligo-element source.

Preferably, the plant growth substrate also comprises at least one filler. As intended herein, the filler is useful as a support for plant roots, for structuring the growth substrate, to reversibly adsorb and/or absorb nutrients, and/or to reversibly adsorb and/or absorb water.

The filler may be an organic filler and/or a mineral filler.

Mineral fillers notably include pozzolana, clay, perlite, vermiculite or sand.

Organic fillers notably include peat, purified compost, coffee grounds and organic fibers, in particular vegetal fibers, such as coco fiber.

Preferably, the at least one filler comprises vegetal fibers.

Preferably, the growth substrate is preformed to fit into the above-defined container.

### Grow light

Preferably, the indoor plant grow system as defined above comprises at least one grow light within the casing, located above the at least one container.

The grow light provides the source of light/energy the plants need to grow.

Preferably, the grow light comprises a plurality of LEDs, i.e. comprises or consists of a LED panel. Preferably, the grow light comprises at least 60, 70, 80, 90, 100, 110, 120 or 130 LEDs. Preferably, the grow light comprises at most 200, 190, 180, 170, 160, 150 or 140 LEDs. Preferably, the grow light comprises from 60 to 200 LEDs, more preferably from 80 to 160 LEDs and most preferably from 130 to 140 LEDs.

Preferably, the grow light emits white light.

Preferably, the grow light has a power of at least 20, 25, 30, 35, 40, 45, 50, 55, 60, 65 or 70 W.

Preferably, the grow light has a power of at most 75, 70, 65, 60, 55, 50, 45, 40, 35 or 30 W.

Preferably, the grow light has a power of from 20 W to 75 W, more preferably of from 30 to 50 W.

Preferably, the at least one grow light is located at least 10, 20, 30, 40, 50, 60, 70, 80, 90, 100, 125 or 150 cm above the opening of the at least one container.

Preferably, the at least one grow light is located at most 175, 150, 125, 100, 90, 80, 70, 60, 50, 40, 30 or 20 cm above the opening of the at least one container.

Preferably, the at least one grow light is located from 20 cm to 1.75 m above the opening of the at least one container, more preferably from 30 cm to 1 m above the opening of the at least one container and most preferably from 30 cm to 45cm above the opening of the at least one container.

Advantageously, the power and/or location of the at least one grow light favours plant growth while allowing for plants to grow in height and preventing them to be burnt by the at least one grow light.

### Fan

Preferably, the indoor plant growing system as defined above comprises at least one fan for extracting air from within the casing.

The at least one fan can be located on any panel of the casing. Preferably, the at least one fan is located on a back panel of the casing, i.e. a panel facing the front side of the casing.

Preferably, the at least one fan is located at least 1, 2, 3, 4, 5, 6, 7, 8, 9, 10, 15 or 20 cm below the at least one grow light.

Preferably, the at least one fan is located at most 30, 20, 15, 10, 9, 8, 7, 6 or 5 cm below the at least one grow light.

Preferably, the at least one fan is located from 2 to 15 cm, from 3 to 12 cm or from 4 to 9 cm below the at least one grow light.

Advantageously, the position of the at least one fan allows an optimal extraction of hot air from within the casing.

### Control module

Preferably, the indoor plant grow system as defined above comprises an automated module for controlling the at least one grow light and/or the at least one fan and/or the at least one water level signal module and/or the at least one oxygenating device.

Preferably, the automated control module comprises, or is linked to, a clock to establish light-dark cycles within the casing.

Preferably, the automated control module is linked to a thermometer within the casing to control the activity of the at least one fan when the temperature within the casing exceeds at least one predetermined temperature. Preferably, there are at least four predetermined temperatures, which respectively control four levels of activity of the at least one fan. By way of example, when the temperature within the casing is below a first predetermined temperature, the at least one fan is at a first level of activity, e.g. from 1% to 10% of the maximum activity level of the at least one fan, when the temperature within the casing is at or above the first predetermined temperature, the level of activity of the at least one fan is at a second level of activity, e.g. from 15% to 30% of the maximum activity level of the at least one fan, when the temperature within the casing is at or above a second predetermined temperature, the level of activity of the at least one fan is a third level of activity, e.g. from 50% to 65% of the maximum activity level of the at least one fan, and when the temperature within the casing is at or above a third predetermined temperature, the level of activity of the at least one fan is a fourth level of activity, e.g. from 70% to 90% of the maximum activity level of the at least one fan.

Preferably, the automated control module is linked to a hygrometer within the casing to control the activity of the at least one fan when the hygrometry within the casing exceeds at least one predetermined hygrometry.

Preferably, the automated control module is linked to the water level detector and controls the water level signalling module.

Preferably, the automated control module is linked to the oximeter and controls the oxygenating or aerating device.

Preferably, the automated control module is detachable from the plant growing system. Preferably also, the automated control module is fixed to the plant growing system.

Preferably, the automated control module comprises means for transmitting information to a remote server, such as a Bluetooth module, a Wi-Fi module or an Ethernet module. Preferably, the automated module can be linked to a mobile app.

### Plants

Preferably, the plants grown in the indoor plant growing system as defined above are flower plants, in particular edible flower plants or cannabis or CBD plants, herbs, fruit plants, vegetables and/or tubercles.

The present invention will be further described by the following non-limiting preferred embodiment and figure.

### Preferred embodiment of the invention

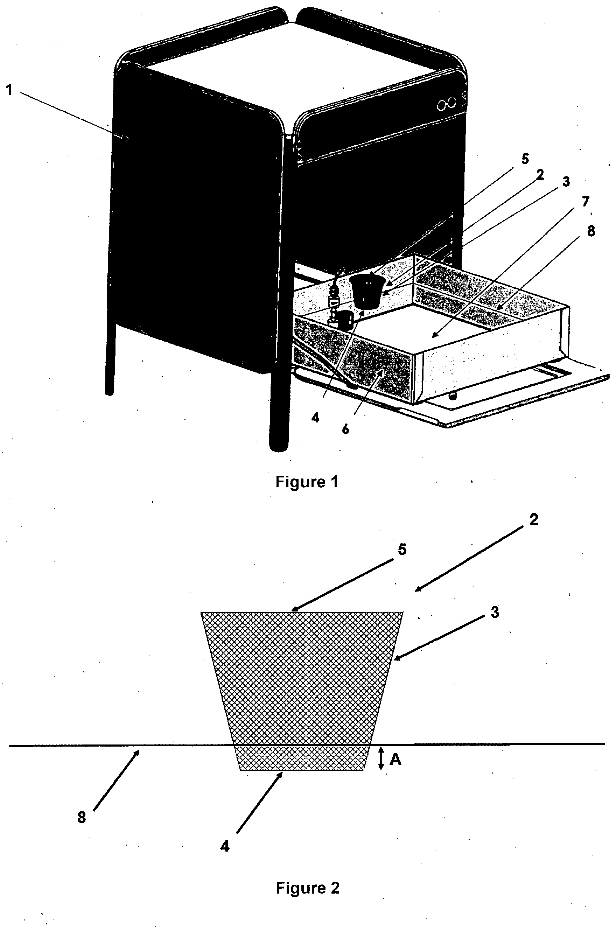

A preferred embodiment of plant growing system according to the invention is represented in Figures 1 and 2. The indoor plant growing system comprises an essentially cubic casing (1) with dimension of about 60 cm x 60 cm x 80 cm. The front panel of the casing opens as a door to reveal a water-tank (6) within the casing, wherein the water-tank can slide on the opened door. In an alternative configuration the door may open sideways. The water-tank has a bottom wall (7) and a maximum fill level (8). On top of the water-tank is placed at least one container (2) for a plant growth substrate, wherein the container comprises a lateral wall (3), a bottom wall (4) and a top opening (5). The lateral wall and the bottom wall of the at least one container have a mesh-like structure and are permeable to water. The height of the lateral wall is of about 6.5 cm and the volume of the at least one container is of about 930 cm³. The at least container is disposed such that from 0.5 mm to 10 mm of the height of the lateral wall from the bottom wall is below the maximum fill level. The casing also comprises a grow light (9) above the at least one container. The water-tank further comprises an oxygenating device (10).

## Claims

1. An indoor plant growing system comprising:
- a casing (1);
- at least one container (2) for a plant growth substrate within the casing, wherein the container comprises a lateral wall (3), a bottom wall (4) and a top opening (5), wherein the lateral wall and/or the bottom wall is permeable to water, wherein the lateral wall has a height from the bottom wall to the top opening, and
- a water-tank (6) within the casing and located below the at least one container, wherein the water-tank has a bottom wall (7) and a maximum fill level (8),
**characterised in that**, the at least one container (2) is plunged directly into the water-tank (6) such that from 0.5 mm of the height of the lateral wall (3) from the bottom wall (4) to 1/8 of the height of the lateral wall (3) from the bottom wall (4) is below the maximum fill level (8).

2. The indoor plant growing system according to claim 1, wherein the height of the lateral wall of the at least one container (2) is of from 3 cm to 30 cm.

3. The indoor plant growing system according to claim 1 or 2, wherein the volume of the at least one container (2) is of from 500 cm³ to 1500 cm³.

4. The indoor plant growing system according to any of claims 1 to 3, wherein the water-tank has a height from its bottom wall (7) to the maximum fill level (8) of 5 cm to 40 cm.

5. The indoor plant growing system according to any of claims 1 to 4, wherein the plant growth substrate comprises a source of nutrients.

6. The indoor plant growing system according to any of claims 1 to 5, comprising at least one grow light (9) within the casing, located above the at least one container.

7. The indoor plant growing system according to claim 6, where the at least one grow light is located from 20 cm to 1.75 m above the opening of the at least one container.

8. The indoor plant growing system according to claim 6 or 7, wherein the at least one grow light and has a power of from 20 W to 75 W.

9. The indoor plant growing system according to any of claims 1 to 8, comprising at least one fan for extracting air from within the casing.

10. The indoor plant growing system according to any of claims 1 to 9, wherein the water-tank comprises at least one water level signal module..

11. The indoor plant growing system according to any of claims 6 to 10, comprising an automated module for controlling the at least one grow light and/or the at least one fan and/or the at least one water level signal module.

12. The indoor plant growing system according to any of claim 1 to 11, wherein the casing is substantially parallelepipedic and has a height of from 40 cm to 2 m, a length of from 30 cm to 1.5 m and a width of from 30 cm to 1.5 m.

13. The indoor plant growing system according to any of claims 1 to 12, comprising from 2 to 128 containers.

14. The use of the indoor plant growing system according to any of claims 1 to 13, to grow plants.

15. The use according to claim 14, to growing flower plants, herbs, fruit plants, vegetables and/or tubercles.

## Patentansprüche

1. Innenraum-Pflanzenanbausystem, umfassend:
- ein Gehäuse (1),
- mindestens einen Behälter (2) für ein Pflanzenanbausubstrat innerhalb des Gehäuses, wobei der Behälter eine Seitenwand (3) umfasst, einen Boden (4) und eine obere Öffnung (5), wobei die Seitenwand und/oder der Boden wasserdurchlässig ist, wobei die Seitenwand eine Höhe vom Boden bis zur oberen Öffnung aufweist, und
- einen Wassertank (6) innerhalb des Gehäuses und unter dem mindestens einen Behälter angeordnet, wobei der Wassertank einen Boden aufweist und ein maximales Füllniveau (8),
**dadurch gekennzeichnet, dass** der mindestens eine Behälter (2) unmittelbar in den Wassertank (6) getaucht wird, derart, dass sich zwischen 0,5 mm der Höhe der Seitenwand (3) vom Boden (4) aus und 1/8 der Höhe der Seitenwand (3) vom Boden (4) aus unter dem maximalen Füllniveau (8) befindet.

2. Innenraum-Pflanzenanbausystem nach Patentanspruch 1, in dem die Höhe der Seitenwand des mindestens einen Behälters (2) zwischen 3 cm und 30 cm beträgt.

3. Innenraum-Pflanzenanbausystem nach Patentanspruch 1 oder 2, in dem das Volumen des mindestens einen Behälters (2) zwischen 500 cm³ und 1500 cm³ beträgt.

4. Innenraum-Pflanzenanbausystem nach irgendeinem der Patentansprüche 1 bis 3, in dem der Wassertank eine Höhe von seinem Boden (7) aus bis zum maximalen Füllniveau (8) von 5 cm bis 40 cm aufweist.

5. Innenraum-Pflanzenanbausystem nach irgendeinem der Patentansprüche 1 bis 4, in dem das Pflanzenanbausubstrat eine Nährstoffquelle enthält.

6. Innenraum-Pflanzenanbausystem nach irgendeinem der Patentansprüche 1 bis 5, mindestens eine Pflanzenwuchslampe (9) innerhalb des Gehäuses umfassend, oberhalb des mindestens einen Behälters angeordnet.

7. Innenraum-Pflanzenanbausystem nach Patentanspruch 6, in dem die mindestens eine Pflanzenwuchslampe zwischen 20 cm und 1,75 m oberhalb der Öffnung des mindestens einen Behälters angeordnet ist.

8. Innenraum-Pflanzenanbausystem nach Patentanspruch 6 oder 7, in dem die mindestens eine Pflanzenwuchslampe eine Leistung von 20 W bis 75 W aufweist.

9. Innenraum-Pflanzenanbausystem nach irgendeinem der Patentansprüche 1 bis 8, mindestens einen Ventilator zum Absaugen von Luft aus dem Gehäuseinneren umfassend.

10. Innenraum-Pflanzenanbausystem nach irgendeinem der Patentansprüche 1 bis 9, in dem der Wassertank mindestens ein Wasserstandsignalmodul aufweist.

11. Innenraum-Pflanzenanbausystem nach irgendeinem der Patentansprüche 6 bis 10, ein automatisches Modul zur Steuerung/ Kontrolle der mindestens einen Pflanzenwuchslampe und/oder des mindestens einen Ventilators und/oder des mindestens einen Wasserstandsignalmoduls umfassend.

12. Innenraum-Pflanzenanbausystem nach irgendeinem der Patentansprüche 1 bis 11, in dem das Gehäuse im Wesentlichen quaderförmig ist und eine Höhe von 40 cm bis 2 m aufweist, eine Länge von 30 cm bis 1,5 m und eine Breite von 30 cm bis 1,5 m.

13. Innenraum-Pflanzenanbausystem nach irgendeinem der Patentansprüche 1 bis 12, 2 bis 128 Behälter umfassend.

14. Gebrauch des Innenraum-Pflanzenanbausystems nach irgendeinem der Patentansprüche 1 bis 13 für den Anbau von Pflanzen.

15. Gebrauch nach Patentanspruch 14, zum Anbau von Blütenpflanzen, Kräutern, Obstpflanzen, Gemüsen und/oder Knollenpflanzen.

## Revendications

1. Système de culture de plantes d'intérieur comprenant :
- un boîtier (1) ;
- au moins un récipient (2) destiné à recevoir un substrat de culture à l'intérieur du boîtier, le récipient comprenant une paroi latérale (3), une paroi inférieure (4) et une ouverture supérieure (5), la paroi latérale et/ou la paroi inférieure étant perméables à l'eau, la paroi latérale ayant une hauteur comprise entre la paroi inférieure et l'ouverture supérieure, et
- un réservoir d'eau (6) à l'intérieur du boîtier et situé sous le au moins un récipient, dans lequel le réservoir d'eau a une paroi inférieure (7) et un niveau de remplissage maximal (8),
**caractérisé en ce que** le au moins un récipient (2) est plongé directement dans le réservoir d'eau (6) de sorte que 0,5 mm de la hauteur de la paroi latérale (3) à partir de la paroi inférieure (4) jusqu'à 1/8 de la hauteur de la paroi latérale (3) à partir de la paroi inférieure (4) se trouve en dessous du niveau de remplissage maximal (8).

2. Système de culture de plantes d'intérieur selon la revendication 1, dans lequel la hauteur de la paroi latérale du au moins un récipient (2) est comprise entre 3 cm et 30 cm.

3. Système de culture de plantes d'intérieur selon la revendication 1 ou 2, dans lequel le volume du au moins un récipient (2) est compris entre 500 cm³ et 1500 cm³ .

4. Système de culture de plantes d'intérieur selon l'une quelconque des revendications 1 à 3, dans lequel le réservoir d'eau a une hauteur entre sa paroi inférieure (7) et le niveau de remplissage maximal (8) comprise entre 5 cm et 40 cm.

5. Système de culture de plantes d'intérieur selon l'une quelconque des revendications 1 à 4, dans lequel le substrat de culture des plantes comprend une source de nutriments.

6. Système de culture de plantes d'intérieur selon l'une quelconque des revendications 1 à 5, comprenant au moins une lampe de culture (9) à l'intérieur du boîtier, située au-dessus du au moins un récipient.

7. Système de culture de plantes d'intérieur selon la revendication 6, dans lequel la au moins une lampe de culture est située entre 20 cm et 1,75 m au-dessus de l'ouverture du au moins un récipient.

8. Système de culture de plantes d'intérieur selon la revendication 6 ou 7, dans lequel la au moins une lampe de culture a une puissance comprise entre 20 W et 75 W.

9. Système de culture de plantes d'intérieur selon l'une quelconque des revendications 1 à 8, comprenant au moins un ventilateur pour extraire l'air de l'intérieur du boîtier.

10. Système de culture de plantes d'intérieur selon l'une quelconque des revendications 1 à 9, dans lequel le réservoir d'eau comprend au moins un module de signalisation du niveau d'eau.

11. Système de culture de plantes d'intérieur selon l'une quelconque des revendications 6 à 10, comprenant un module automatisé pour commander la au moins une lampe de culture et/ou le au moins un ventilateur et/ou le au moins un module de signalisation du niveau d'eau.

12. Système de culture de plantes d'intérieur selon l'une quelconque des revendications 1 à 11, dans lequel le boîtier est sensiblement parallélépipédique et a une hauteur comprise entre 40 cm et 2 m, une longueur comprise entre 30 cm et 1,5 m et une largeur comprise entre 30 cm et 1,5 m.

13. Système de culture de plantes d'intérieur selon l'une quelconque des revendications 1 à 12, comprenant de 2 à 128 conteneurs.

14. Utilisation du système de culture de plantes d'intérieur selon l'une quelconque des revendications 1 à 13, pour cultiver des plantes.

15. Utilisation selon la revendication 14, pour cultiver des plantes à fleurs, des herbes aromatiques, des plantes fruitières, des légumes et/ou des tubercules.
